# EUROPÄISCHE PATENTSCHRIFT

(11) **EP 3 099 563 B1**
(45) Veröffentlichungstag und Bekanntmachung des Hinweises auf die Patenterteilung: **23.08.2017**
(21) Anmeldenummer: 15705511.2
(22) Anmeldetag: 22.01.2015
(51) Int. Cl.: B63B 17/00, B63H 21/38, F02M 21/02

(54) **SCHIFF MIT TREIBSTOFFTANK FÜR FLÜSSIGGAS**
SHIP WITH FUEL TANK FOR LIQUEFIED GAS
NAVIRE COMPRENANT UN RÉSERVOIR À CARBURANT POUR GAZ LIQUÉFIÉ

(30) Priorität: 31.01.2014 DE 202014000942 U
(43) Veröffentlichungstag der Anmeldung: 07.12.2016
(73) Patentinhaber: Technolog GmbH Handels- und Beteiligungsgesellschaft für Technologie, 20459 Hamburg (DE)
(72) Erfinder: PRUIN, Berend, 21423 Winsen (DE); RADEBOLD, Helmut, 25379 Herzhorn (DE); RASEWSKY, Christoph, 20359 Hamburg (DE)
(74) Vertreter: Heim, Florian Andreas
(86) Internationale Anmeldenummer: PCT/EP2015/051197
(87) Internationale Veröffentlichungsnummer: WO 2015/113886

(56) Entgegenhaltungen:
- EP-A1- 2 029 421
- EP-A2- 2 374 710
- GB-A- 2 481 983
- US-A1- 2006 086 412
- US-A1- 2013 233 392

## Beschreibung

Die Erfindung betrifft ein Schiff mit einem Deckshaus als mindestens ein Decksaufbau. Üblicherweise ist auf dem obersten Deck des Deckshauses die Brücke vorgesehen. Des Weiteren ist ein Maschinenraum mit mindestens einer Antriebsmaschine vorhanden sowie mindestens ein Treibstofftank für Flüssiggas. Bei diesem Schiff ist der Treibstofftank für Flüssiggas im Bereich des Deckshauses oder Decksaufbaus vorgesehen.

Ein Schiff dieser Art ist zum Beispiel aus der EP 2 374 710 A2 bekannt.

Das darin beschriebene Schiff hat einen Dual-fuel-Antrieb, so dass zumindest die Hauptantriebsmaschine mit Schweröl oder Diesel betrieben werden kann, aber auch Gas nach den Umwandlungsschritten aus LNG (Liquid Natural Gas) oder LPG (Liquid Petrol Gas) zum Antrieb zur Verfügung steht.

Insbesondere in Fahrtgebieten oder Häfen mit hohen ökologischen Auflagen, kann ein entsprechendes Schiff dann im Gasbetrieb fahren.

Insbesondere für Containerschiffe zeigt das in der EP 2 374 710 A2 beschriebene Schiff die Möglichkeit, einen entsprechenden Tank für Flüssiggas unterhalb der Decksaufbauten anzuordnen.

Allerdings ist der dort vorgesehen Tank ein Typ-B-Tank, der fest mit den Querschotts in dem entsprechenden Schiff zum Beispiel verschweißt ist, wobei bei eventuellen Leckagen auch eine direkte Gasberührung mit dem umgebenden Stahl auftreten kann.

Unter sicherheitstechnischen Gesichtspunkten und im Hinblick auf eine Nachrüstung eines derartigen Gastanks bestehen daher erhebliche Probleme.

Ein anderes Beispiel eines Containerschiffes mit einem oder mehreren Treibstofftanks unterhalb von Schiffsaufbauten ist aus der DE 43 10 692 A1 bekannt. In diesem Fall befinden sich der oder die Treibstofftanks unterhalb eines entsprechenden Lademastes oder einer Kransäule, um auf diese Weise weiteren Frachtraum für Container an der frei werdenden Stelle des Treibstofftanks zu schaffen.

Aus der EP 2 029 421 A1 ist eine Fähre bekannt, deren Antriebsmaschine mit Flüssiggas betrieben wird. Die für das Flüssiggas vorgesehenen Tanks sind als separate Tanks mit erheblicher vertikaler Erstreckung oberhalb des Hauptdecks bis nahezu zum obersten Deck des Schiffes vorgesehen, wobei diese Tanks in einem sich weitgehend über die gesamte Höhe des Schiffes erstreckenden Tankraum platziert sind. Dieser Tankraum ist benachbart zu dem Gehäuseschacht vorgesehen, in dem Abgasleitungen und Abluftleitungen aufsteigend vom Maschinenraum zum Schornstein des Schiffes geführt sind. Zwar wird bei dieser Anordnung der Tanks vorgeschlagen, eine geringfügige Länge der Tanks auch unterhalb des Hauptdecks vorzusehen, wobei jedoch die Haupterstreckung und Länge der Tanks oberhalb des Hauptdecks in dem entsprechenden Tankraum vorgesehen bleibt.

Unter sicherheitstechnischen Aspekten weisen diese vertikal sehr hohen Tanks erhebliche Risiken auf, wobei auch die Austauschbarkeit der Tanks oder deren Nachrüstmöglichkeiten erhebliche Schwierigkeiten bereiten.

Aus der US 2013/0233392 A1 ist ein Gastanker für LNG bekannt. Neben den eigentlichen Frachttanks für LNG (Liquid Natural Gas) sind für den eigenen Antrieb des Gastankers im Nahbereich zum Maschinenraum vor den Decksaufbauten und unterhalb des Hauptdecks zwei kleinere LNG-Brennstofftanks für den eigenen Schiffsantrieb vorgesehen. Diese LNG-Brennstofftanks können aber auch auf Deck des Schiffes gefahren werden, was auch für den Gasbetriebsraum gilt. Leitungsmäßig ist der oder die LNG-Brennstofftanks in einem großen Abstand zum Maschinenraum platziert.

Ein weiteres Beispiel eines Schiffes mit Flüssiggas als Brennstoff für die Antriebsmaschinen ist in der GB 2 481 983 A beschrieben. Bei diesem Schiff werden ebenfalls sich teilweise über die gesamte Höhe des Schiffes oberhalb des Hauptdecks erstreckende Flüssiggas-Tanks eingesetzt, die in vertikalen nach oben offenen Schächten des Schiffes angeordnet sind.

Der Erfindung liegt daher die **Aufgabe** zugrunde, das sicherheitstechnische Konzept eines Schiffes, insbesondere eines Containerschiffes, wesentlich zu verbessern, wobei auch der Aspekt einer guten Frachtraumnutzung mitberücksichtigt und die Möglichkeit der Nachrüstung eines Treibstofftanks für Flüssiggas vereinfacht werden sollte.

Diese Aufgabe wird bei einem eingangs genannten, gattungsgemäßen Schiff mittels der Merkmale des Anspruches 1 gelöst.

Ein wesentlicher Kerngedanke der Erfindung ist dabei, sicherheitstechnisch einen oder mehrere C-Tanks als Treibstofftank für Flüssiggas zu wählen und diesen oder diese stehend, liegend oder hängend im Treibstoffraum zu platzieren.

Unter C-Tank wird in dieser Anmeldung ein außerhalb des Schiffes an Land vorgefertigter Tank verstanden.

Eine sehr eng benachbarte Zuordnung des Maschinenraums mit der Hauptantriebsmaschine mit dem Treibstoffraum und C-Tank sowie mit dem Gasbetriebsraum, stellt daher aufgrund der sehr kurzen Rohrleitungssysteme ein erheblich verringertes Gefahrenpotential bei Leckagen oder Verpuffungsaspekten im Zusammenhang mit dem Gas dar.

Im Prinzip werden bei einer Platzierung des Treibstoffraumes mit C-Tank unterhalb des Deckshauses keine oder nur minimale Ladungsverluste durch die LNG-Ausrüstung und Aggregate verursacht.

Es wird aufgrund dieses ECO-Gas-Sicherheitssystems der kürzestmögliche Weg des Gases hin zur Hauptantriebsmaschine realisiert.

Dieses Sicherheitssystem ist bevorzugterweise auch für rein gasbetriebene Schiffe und deren Antriebsmaschinen und energieerzeugende Hilfsaggregate einsetzbar.

Bei der Platzierung des Treibstoffraumes mit Tank unterhalb der Decksaufbauten mit kurzen Verbindungsleitungen über den Gasbetriebsraum zum Hauptmaschinenraum wird dabei auch die vor dem Deckhaus liegende Bay unterhalb des Hauptdecks als Laderaum für Container nutzbar.

In bevorzugter Weise wird der C-Tank für Flüssiggas derart im Treibstoffraum angeordnet, dass der Dom des Tanks in den Gasbetriebsraum hineinragt. Auch hierdurch werden kurze Leitungsverbindungen bei der Druckreduzierung und Vaporisierung des Flüssiggases zur Weiterführung in den Maschinenraum geschaffen. Der C-Tank wird zweckmäßigerweise mit der Ausrichtung seines Domes nach oben im Schiff platziert. Eine seitliche Ausrichtung oder sogar nach unten gerichtete Orientierung des Domes ist möglich und abhängig von dem Erfordernis, möglichst kurze Leitungsverbindungen zum Gasbetriebraum und dem Maschinenraum zu erhalten.

Der vorteilhaft eingesetzte C-Tank kann an Land, zum Beispiel in der Werft, komplett vorgefertigt werden und auch bei Nachrüstmaßnahmen relativ einfach und kostensparend im Schiff in enger Nachbarschaft zum Maschinenraum platziert werden.

Dies kann beispielsweise einerseits durch Absenken des vorgefertigten C-Tanks vor dem Deckshaus und einen Verschiebevorgang im Schiff durchgeführt werden. Auch die Öffnung der Schiffseitenwand und das Einschieben dieses C-Tanks in das Schiff ist realisierbar.

Das erfindungsgemäße Konzept berücksichtigt daher auch die räumliche und sicherheitstechnische Kombination eines C-Tanks im Treibstoffraum mit in den Gasbetriebsraum hineinragendem Dom des Tanks und der Anordnung eng benachbart zum Maschinenraum. Der Gasbetriebsraum kann bevorzugterweise auch die Gas-Bunker-Station aufweisen und als Übergabebereich für Flüssiggas genutzt werden. Die Verwendung von C-Tanks im erfindungsgemäßen Konzept bietet daher im Vergleich zu anderen Tank-Typen die Vorteile einer höheren Flexibilität, was insbesondere aus der separaten Herstellung, der leichteren Nachrüstbarkeit und Austauschbarkeit des C-Tanks resultiert, und auch den Betriebe unter Druck, ermöglicht. Auch eine Isolierung der C-Tanks lässt sich speziell bei doppelwandiger Ausführung einfacher realisieren. Das für einen C-Tank bevorzugt verwendete Material ist eine Stahllegierung, insbesondere ein 9%-Nickelstahl oder Aluminium.

Ein weiterer wesentlicher Gedanke der Erfindung, der auch eigenständigen Erfindungscharakter hat, ist das Konzept, ein Schiff so zu bauen, dass ein Deckshaus oder Decksaufbau asymmetrisch zur Schiffslängsachse mit einem Freiraum, insbesondere oberhalb des Hauptdecks, zur entfernteren seitlichen Schiffsbordwand, angeordnet ist.

Diese asymmetrische Anordnung des Deckshauses oder Decksaufbaus ermöglicht es, bei einem Nachrüstvorgang mit einem vorausgehend angesprochen C-Tank für Flüssiggas, diesen Tank über den Freiraum in das Schiff abzusenken und den Tank im Wesentlichen unterhalb des Hauptdeckes zu platzieren.

Hierdurch kann ein kostengünstiger Nachrüstablauf geschaffen werden. Andererseits kann dieser Freiraum im Bereich des Deckshauses auch zur Stapelung weiterer Fracht, wie Container, genutzt werden.

Diese asymmetrische Anordnung verbessert aber auch das sicherheitstechnische Konzept im Zusammenhang mit einem C-Tank für Flüssiggas, da es möglich ist, einen Boil-off-Mast, wie er für das Abblasen von Gefahrfluid aus dem Tankraum oder Maschinenraum erforderlich ist, mit erheblichem Abstand vom Deckshaus und darin befindlichen Wohnraum zur asymmetrischen Seite des Deckshauses im Bereich der seitlichen Bordwand nach oben bis in eine Höhe über das Deckshaus zu verlegen. Die in derartigen Fällen bei asymmetrischer Auslegung über den Freiraum geführte Brücken-Gangway kann daher mit ihrer Abstützung, zum Beispiel zum Hauptdeck des Schiffes, auch eine Befestigungsmöglichkeit für den nach oben geführten Boil-off-Mast bieten. Die Abstützung lässt sich auch so gestalten, dass sie selber als Boil-off-Mast genutzt werden kann.

Da das Deckshaus normalerweise im Wesentlichen über die gesamte Breite des Schiffes von Schiffsseite zu Schiffsseite reicht, ist zur Verringerung des Gefahrenpotentials im Hinblick auf den obersten Austrittspunkt des Boil-off-Mastes eine im oberen Bereich des Deckshauses vorgesehene Brücke mit größerem Abstand zum Boil-off-Mast vorgesehen, also asymmetrisch auf dem Deckshaus, insbesondere überwiegend auf der dem Boil-off-Mast gegenüberliegenden Schiffsseite, angeordnet. Dadurch wird sichergestellt, dass auch beim abrupten Ausströmen von Gefährdungsfluiden die Kommando-Brücke aufgrund des bestehenden Abstandes zum Boil-off-Mast ohne wesentliche Beeinträchtigung bleibt.

Der C-Tank hat bevorzugt eine zylindrische Form mit kalottenförmigen Abschlüssen an den Endbereichen, insbesondere im Bodenbereich und oberen Bereich. Auch eine Bilobe-Form für den C-Tank kann geeigneterweise vorgesehen sein. Der im oberen Bereich des C-Tanks vorgesehene Dom für Anschlussleitungen ragt nach Möglichkeit in den Gasbetriebsraum hinein, so dass eine vereinfachte Anschlusstechnik mit Reduzierungsstufen im Hinblick auf den Druck und die Temperatur des Flüssiggases angeordnet werden kann. Die eng benachbarte Kombination von Treibstoffraum, Gasbetriebsraum und Maschinenraum bietet durch die kurzen Leitungswege aber auch durch die Konzentration von Gefahrenzonen eine bessere Beherrschbarkeit als in Fällen einer voneinander weit beabstandeten Anordnung dieser Baugruppen.

Unter dem Begriff der Bilobe-Form wird im Wesentlichen eine aus zwei durch eine Mittelwand miteinander verbundene Konfiguration von Tanks verstanden, die zum Beispiel im Querschnitt zur Längsachse eines Bilobe-Tanks betrachtet aus Kreissegmenten größer als 200° zusammengesetzt ist, welche an den Verbindungsstellen der Mittelwand bevorzugt miteinander verschweißt sind.

Die Anordnung des Deckshauses oder von Decksaufbauten über dem Treibstoffraum und Gasbetriebsraum schafft mehr Frachtraum hinter dem Deckshaus bzw. den Decksaufbauten.

Bei einer Platzierung des Deckshauses z.B. nach achtern, oberhalb des Maschinenraums, ist eine leichtere Nachrüstbarkeit eines C-Tanks für Flüssiggas möglich, wobei oberhalb des Treibstoffraumes weiterer Raum zur Stapelung von Frachtcontainern geschaffen wird.

Der eigenständige erfinderische Gedanke der asymmetrischen Anordnung des Deckshauses auf dem Schiff schafft im benachbarten seitlichen Bereich einen Freiraum.

Dieser Freiraum kann einerseits zur Führung des Boil-off-Masts mit größerem Abstand zum Deckshaus genutzt werden. Andererseits sind über diesen Freiraum auch einfachere Nachrüstmöglichkeiten zur Einbringung zum Beispiel eines C-Tankes im Schiffsrumpf benachbart zum Maschinenraum möglich.

Bei der asymmetrischen Anordnung des Deckshauses wird bevorzugt über den Freiraum eine Brücken-Gangway bis zur fiktiv verlängerten Schiffsseitenwand geführt, um Fahrtmanöver, insbesondere Anlegemanöver an einer Pier, beidseitig gut steuern zu können.

Der erreichte Freiraum durch die asymmetrische Anordnung des Deckshauses kann auch zur Stapelung weiterer Fracht, insbesondere Container, genutzt werden.

Sofern aufgrund von Raumerfordernissen das Deckshaus im Wesentlichen von einer Schiffsseite zur anderen reicht, kann zumindest die Kommando-Brücke im oberen Bereich mit Abstand versetzt zum Boil-off-Mast und damit asymmetrisch zur Schiffslängsachse angeordnet werden.

Vorteilhafterweise ist der an Land vorgefertigte C-Tank für die Aufnahme von Flüssiggas als doppelwandiger Tank ausgebildet, um Kühlprozesse oder auch Leckagefälle besser beherrschbar zu machen.

Ein weiterer Vorteil der Erfindung ist, dass die Gas-Bunkerstation unmittelbar in der Nähe des Doms des C-Tanks und des ganzen gasaufbereitenden Equipments realisiert werden kann, so dass eine Konzentration der gasführenden Einrichtungen und eine Verminderung von Gefahrenzonen und -bereichen realisiert wird. Hierzu kann auch die sichere Anordnung des Boil-off-Mastes gezählt werden.

Das erfindungsgemäße Sicherheitskonzept kann auch bei immer größer werdenden Schiffen, zum Beispiel Mega-Containerschiffen mit einer Transportkapazität im Bereich 10.000 oder mehr Standard-Containern und insbesondere auch für Umrüstungen bzw. Nachrüstungen bei andere Schiffstypen eingesetzt werden.

In diesen Fällen kann zusätzlich zu dem gegebenenfalls nach vorne versetzten Deckshaus mit Brücke und Wohnräumen der Besatzung, im achterlichen Bereich des Schiffes auch ein oder mehrere weitere Decksaufbauten vorhanden sein. Decksaufbauten dieser Art können zum Beispiel durch die nach oben geführten und weit über das Hauptdeck emporragenden Abgaskamine gebildet werden.

Auch bei einer derartigen Schiffskonstruktion können die Treibstoffräume mit Treibstofftanks für Flüssiggas unterhalb dieses achterlichen Decksaufbau, gegebenenfalls auch daneben, und benachbart zum Maschinenraum und einem Gas-Betriebsraum realisiert werden.

Eine derartige Realisierung ist sowohl bei einem zentral angeordneten Abgaskamin also auch bei nach außen zur Schiffswand versetzten Abgaskaminen möglich.

Die Erfindung wird nachfolgend anhand schematischer Darstellungen noch näher erläutert.

Es zeigen:
- Fig. 1: einen schematischen Längsschnitt durch den achterlichen Bereich eines Containerschiffes mit oberem Deckshaus und im Schiff platzierten Maschinenraum und Treibstoffraum;
- Fig. 2: einen vergleichbaren Längsschnitt wie in Fig. 1 durch den achterlichen Teil eines Containerschiffes, bei dem das Deckshaus über dem Maschinenraum angeordnet ist,
- Fig. 3: einen vertikalen Schnitt durch ein Containerschiff über die Breite des Schiffes mit asymmetrischer Anordnung des Deckshauses und der Platzierungsmöglichkeit eines Tanks für Flüssiggas, und
- Fig. 4: einen weitgehend mit Fig. 2 übereinstimmenden Längsschnitt durch den achterlichen Teil eines Containerschiffes, bei dem eine liegende Anordnung eines C-Tanks in geständerter Ausführung gezeigt ist.

Die nachfolgend in den Figuren verwendeten gleichen Bezugszeichen betreffen jeweils gleiche Schiffsbereiche oder Schiffseinrichtungen.

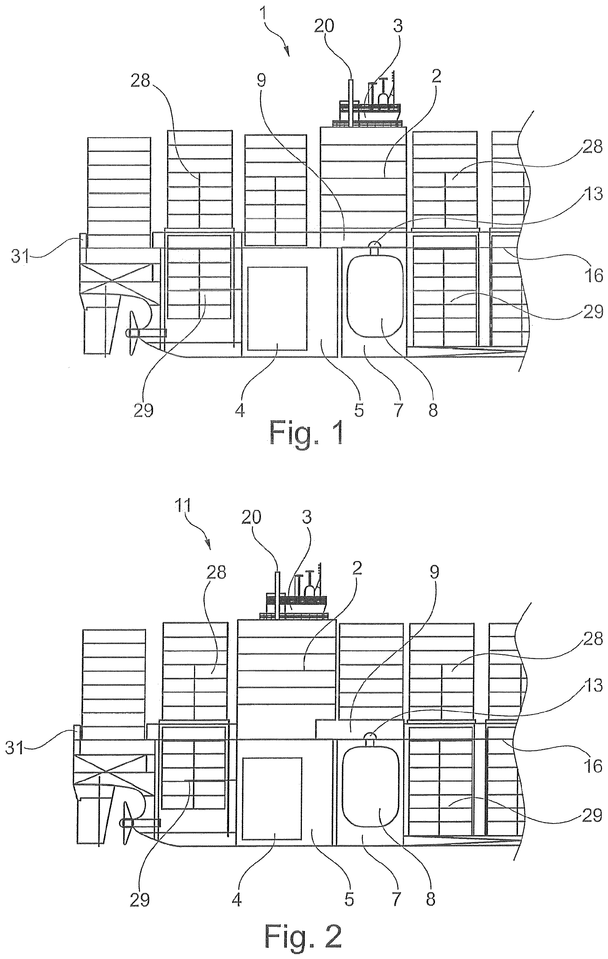

Die Darstellung nach Fig. 1 mit dem schematischen Längsschnitt durch den achterlichen Bereich eines Schiffes 1, insbesondere eines Containerschiffes, zeigt unterhalb eines Deckshauses 2 einen Gasbetriebsraum 9, der etwa im Bereich des Hauptdecks 16 liegt und die Länge des Deckshauses 2 aufweist.

Unterhalb dieses Gasbetriebsraumes 9 befindet sich ein Treibstoffraum 7, in dem ein Treibstofftank 8 für Flüssiggas angeordnet ist. Dieser, im Querschnitt etwa zylindrische Tank 8 ist als C-Tank konzipiert. Dies bedeutet, dass der Tank 8 ein zum Beispiel an Land vorgefertigter Tank ist, der dann zwischen zwei Querschotten des Schiffes 1 fest aufgehängt im Treibstoffraum 7 platziert ist. Der zweckmäßigerweise doppelwandig ausgebildete Tank 8 ragt hierbei mit seinem Dom 13, der die wesentlichen Anschlüsse zum Tank und der darin enthaltenen Flüssiggas aufweist, in den Gasbetriebsraum 9 hinein. Im Hinblick auf eine sichere Druckauslegung des Tanks 8 sind der untere und obere Bereich kalottenförmig ausgebildet.

Direkt benachbart zum Treibstoffraum 7 ist nach achtern gesehen der Maschinenraum 5 mindestens mit der Hauptantriebsmaschine 4 angeordnet.

Diese direkt benachbarte Anordnung von Treibstoffraum 7 mit Tank 8, dem Gasbetriebsraum 9 und dem Maschinenraum 5 mit Hauptmaschine 4, erlaubt es, sehr kurze Leitungsverbindungen zwischen dem C-Tank 8 und der Antriebsmaschine 4, welche mit Gas als Kraftstoff angetrieben wird, herzustellen, so dass Gefährdungszonen durch den Gasantrieb eng zusammengefasst und somit sicherheitstechnisch besser ausgelegt werden können.

Nach achtern gesehen sind in Richtung des Hecks 31 sowohl über Deck als auch unter Deck Frachtcontainer 28, 29 gestapelt.

Gleiches gilt für den Schiffsraum vor dem Deckshaus 2. Auch dort können aufgrund der Anordnung des Treibstoffraumes 7 direkt unter dem Deckshaus 2 und dem Gasbetriebsraum 9 sowohl über Deck als auch unter Deck Container 28, 29 transportiert werden.

Im Bereich der Brücke 3 ist diese überragend ein Boil-off-Mast 20 vorhanden, über den Gefährdungsfluide, insbesondere Leckagegase aus dem Treibstoffraum 7 beziehungsweise Maschinenraum 5 oder dem Gasbetriebsraum 9 abgeleitet und abgeblasen werden können.

In Fig. 2 ist ein analoger Längsschnitt wie in Fig. 1 durch ein Schiff 11 im achterlichen Bereich gezeigt.

Der wesentliche Unterschied im Beispiel nach Fig. 2 kann darin gesehen werden, dass das Deckshaus 2 um eine Bay nach achtern versetzt über dem Maschinenraum 5 platziert ist.

Hierdurch ist ein Freiraum oberhalb des Treibstoffraumes 7 mit Tank 8 und dem Gasbetriebsraum 9 geschaffen, in dessen Bereich ebenfalls Frachtcontainer gestapelt werden können.

Diese Anordnung ermöglicht es, im Falle einer Nachrüstung eines C-Tankes 8 für Flüssiggas, den Tank selbst durch den dann normalerweise offenen Laderaum abzusenken und in einem bestimmungsgemäß hergestellten Treibstoffraum 7, zum Beispiel fest verschweißt, anzuordnen.

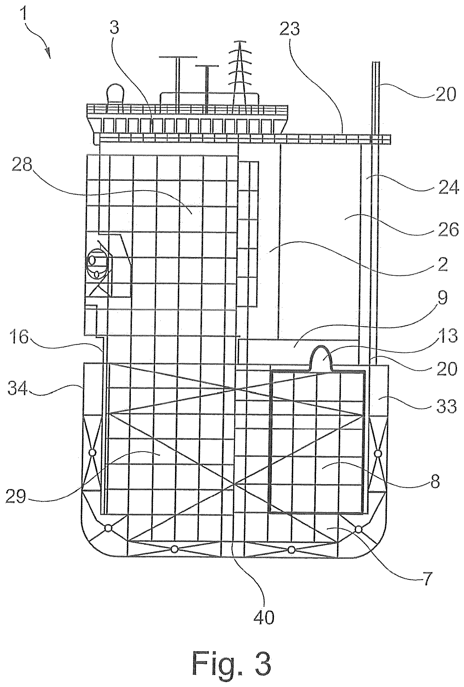

In Fig. 3 ist ein schematischer Vertikalschnitt über die Breite eines Schiffes 1 gezeigt. In diesem Fall ist das Deckshaus 2 mit Brücke 3 asymmetrisch zur vertikalen Mittschiffslinie 40 angeordnet. Dies bedeutet, dass im rechten Bereich oberhalb des Hauptdecks und des Gasbetriebsraums 9 ein Freiraum 26 vorhanden ist. Bei dieser Vertikalschnittansicht, die das Schiff 1 von vorn nach achtern schematisch darstellen soll, ist der C-Tank 8 unterhalb des Hauptdecks 16 eingebracht worden, wobei der Dom 13 in den Gasbetriebsraum 9 hineinragt. Auf der Backbordseite 33 der Schiffsbordwand erstreckt sich vom Hauptdeck 16 eine Stütze 24 nach oben zur Abstützung der Brücken-Gangway 23, die bis zur vertikalen Verlängerung der Schiffsseitenwand reicht.

In diesen Bereich ist auch der Boil-off-Mast 20 mit einer Erstreckung über den obersten Bereich der Brücke hinaus nach oben geführt, so dass ein Abblasen von Gefährdungsgasen sicherheitstechnisch ohne größeres Risiko erfolgen kann. Insbesondere durch den horizontalen Abstand zwischen der Seitenwand des asymmetrisch angeordneten Deckshauses 2 und der Ableitung von Gefährdungsgasen oberhalb der Schiffsaufbauten wird ein sicherheitstechnisches Risiko weitgehend vermieden.

Andererseits erlaubt der Freiraum 26 aufgrund der asymmetrischen Anordnung des Deckshauses 2 auch eine einfache, kostengünstige Anordnung eines C-Tanks 8 im Schiffsrumpf unterhalb des Hauptdecks 16.

Vereinfacht dargestellt sind die Containerstapel 28 auf Deck beziehungsweise Containerstapel 29 unter Deck, die im Beispiel im Wesentlichen auf der Steuerbordseite 34 des Schiffes 1 eingezeichnet sind.

Die asymmetrische Anordnung des Deckshauses 2 hat aufgrund der dadurch erreichten Vorteile eigenständigen Erfindungscharakter. Dies betrifft einerseits die Reduzierung des Gefahrenpotenzials, welches durch Flüssiggas und den Gasantrieb in der Hauptmaschine 4 gegeben ist. Zum anderen wird durch den entsprechenden Freiraum 26 auch die Möglichkeit geschaffen, eine Nachrüstung oder einen Austausch eines Treibstofftankes 8 in relativ einfacher Weise kostengünstig und zeitsparend durchführen zu können.

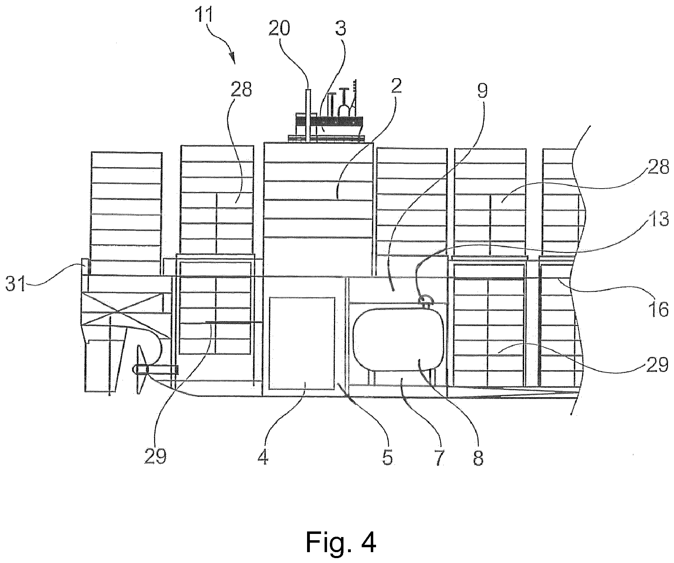

Die schematische Darstellung nach Fig. 4 zeigt ein Ausführungsbeispiel wie in Fig. 2 zu einem Containerschiff dargestellt. Die Anordnung des entsprechenden C-Tanks 8 in dem Treibstoffraum 7 zeigt eine liegende Anordnung des C-Tanks, der auf dem Doppelboden des Schiffes geständert gelagert ist. Der Dom 13 ragt auch bei diesem Beispiel direkt in den Gas-Betriebsraum, um kurze Fluidleitungen zu schaffen.

## Patentansprüche

1. Schiff (1; 11) mit einem Deckshaus (2) als mindestens ein Decksaufbau,
mit einem Maschinenraum (5) mit mindestens einer Antriebsmaschine (4) und
mit mindestens einem Treibstofftank (8) für Flüssiggas,
bei dem der Treibstofftank (8) für Flüssiggas im Bereich des Deckshauses (2) oder eines Decksaufbaus unterhalb des Hauptdecks (16) des Schiffes (1; 11) vorgesehen ist,
wobei der Treibstofftank (8) für Flüssiggas als außerhalb des Schiffes (1) vorgefertigter Tank in einem Treibstoffraum (7) angeordnet ist, der direkt benachbart zum Maschinenraum (5) vorgesehen ist,
**dadurch gekennzeichnet**,
a) dass der Treibstofftank (8) als C-Tank ausgebildet ist,
b) dass direkt benachbart zum Treibstoffraum (7) ein Gasbetriebsraum (9) angeordnet ist,
c) dass der Treibstoffraum (7), der Gasbetriebsraum (9) und der Maschinenraum (5) direkt benachbart zueinander angeordnet sind,
d) dass der Treibstofftank (8) einen Anschlussdom (13) aufweist, der mit dem direkt benachbart zum Treibstoffraum (7) angeordneten Gasbetriebsraum (9) anschlussmäßig verbunden ist,
e) dass der C-Tank (8) mit seinem Anschlussdom (13) in den Gasbetriebsraum (9) hineinragend angeordnet ist,
f) dass das Deckshaus (2) asymmetrisch zur Schiffslängsachse (40) mit einem Freiraum (26) zur entfernteren seitlichen Schiffsbordwand (33) vorgesehen ist,
oder dass das Deckshaus (2) im oberen Bereich eine asymmetrisch zur Schiffslängsachse (40) angeordnete Brücke (3) mit Abstand zu einer Schiffsseite aufweist,
h) dass mindestens ein Boil-off-Mast (20) zur Abgabe von Gefahrfluid wie vaporisiertem Flüssiggas vorgesehen ist, und
i) dass der Boil-off-Mast (20) das Deckshaus (2) einschließlich Brücke (3) überragend im Außenbereich des Deckshauses (2) oder beabstandet dazu im Freiraum 26) nach oben geführt ist.

2. Schiff nach Anspruch 1,
**dadurch gekennzeichnet,**
**dass** der als C-Tank (8) ausgebildete vorgefertigte Treibstofftank (8) hängend, liegend oder stehend, mit zylindrischer Form oder mit Bilobe-Form, im Treibstoffraum (7) angeordnet ist.

3. Schiff nach einem der Ansprüche 1 oder 2,
**dadurch gekennzeichnet,**
**dass** das Deckshaus (2) oberhalb des Treibstoffraumes (7) mit Treibstofftank (8) oder über dem Maschinenraum (5) angeordnet ist.

4. Schiff nach einem der Ansprüche 1 bis 3,
**dadurch gekennzeichnet,**
**dass** bei asymmetrischer Anordnung des Deckshauses (2) mit Freiraum (26) mindestens ein Treibstofftank (8) unterhalb des Freiraumes (26) im Schiff platziert ist.

5. Schiff nach einem der Ansprüche 1 bis 4,
**dadurch gekennzeichnet,**
**dass** der Freiraum (26) zur entfernteren seitlichen Schiffsbordwand (33) zur Stapelung von Containern, Stückgüter oder Projekt-Ladung nutzbar ist.

6. Schiff nach einem der Ansprüche 1 bis 5,
**dadurch gekennzeichnet,**
**dass** die Antriebsmaschine (4) als Dual-fuel-Maschine oder reine gasbetriebene Maschine ausgelegt ist.

7. Schiff nach einem der Ansprüche 1 bis 6,
**dadurch gekennzeichnet,**
**dass** bei asymmetrischer Anordnung mindestens eine Brücken-Gangway (23) in Schiffsbreite bis zur vertikalen Außenbordwandbegrenzung (33) geführt ist.

8. Schiff nach einem der Ansprüche 1 bis 7,
**dadurch gekennzeichnet,**
**dass** der C-Tank (8) doppelwandig und/oder isoliert ausgeführt ist.

9. Schiff nach einem der Ansprüche 1 bis 8,
**dadurch gekennzeichnet,**
**dass** bei einer asymmetrischen Anordnung der Brücke (3) diese mit Abstand zum Boil-off-Mast (20) zur Reduzierung des Gefährdungspotentials vorgesehen ist.

10. Schiff nach einem der Ansprüche 1 bis 9,
mit vom Deckshaus getrennten, im Bereich des Maschinenraums des Schiffes vorgesehenem achterlichen Decksaufbau mit einem oder mehreren Abgaskaminen,
**dadurch gekennzeichnet,**
**dass** der oder die Treibstofftanks für Flüssiggas in einem oder mehreren Treibstoffräumen unterhalb dieses Decksaufbaus angeordnet sind.

11. Schiff nach einem der Ansprüche 1 bis 10,
**dadurch gekennzeichnet,**
**dass** es als Containerschiff ausgebildet ist.

## Claims

1. Ship (1; 11) with a deckhouse (2) as at least one superstructure,
having an engine room (5) with at least one driving engine (4) and
having at least one fuel tank (8) for liquefied gas,
wherein the fuel tank (8) for liquefied gas is provided in the area of the deckhouse (2) or a superstructure below the main deck (16) of the ship (1; 11),
wherein the fuel tank (8) for liquefied gas is arranged as a tank that has been premanufactured outside of the ship (1) in a fuel room (7) which is provided directly adjacent to the engine room (5),
**characterised in that**
a) the fuel tank (8) is designed as a type-C tank,
b) a gas operation room (9) is arranged directly adjacent to the fuel room (7),
c) the fuel room (7), the gas operation room (9) and the engine room (5) are arranged directly adjacent to each other,
d) the fuel tank (8) has a connecting dome (13) which is connected by connecting lines to the gas operation room (9) arranged directly adjacent to the fuel room (7),
e) the type-C tank (8) with its connecting dome (13) is arranged projecting into the gas operation room (9),
f) the deckhouse (2) is provided asymmetrically with respect to the ship's longitudinal axis (40) with a free space (26) towards the more distant ship's side (33),
or the deckhouse (2) has in the upper area a bridge (3) arranged asymmetrically with respect to the ship's longitudinal axis (40) at a distance from one side of the ship,
h) at least one boil-off mast (20) is provided to discharge hazardous fluid such as vaporised liquefied gas, and
i) the boil-off mast (20) is guided upwards, projecting over the deckhouse (2) including bridge (3), in the outer area of the deckhouse (2) or spaced apart from it in the free space (26).

2. Ship according to claim 1,
**characterised in that**
the premanufactured fuel tank (8) designed as a type-C tank (8) is arranged suspended, horizontally or vertically, with a cylindrical form or with bi-lobe form in the fuel room (7).

3. Ship according to one of claims 1 or 2,
**characterised in that**
the deckhouse (2) is arranged above the fuel room (7) with fuel tank (8) or above the engine room (5).

4. Ship according to one of claims 1 to 3,
**characterised in that**
in an asymmetrical arrangement of the deckhouse (2) with free space (26) at least one fuel tank (8) is positioned in the ship below the free space (26).

5. Ship according to one of claims 1 to 4,
**characterised in that**
the free space (26) to the more distant ship's side (33) can be used to stack containers, bulk goods or project load.

6. Ship according to one of claims 1 to 5,
**characterised in that**
the driving engine (4) is configured as a dual-fuel engine or a purely gas-powered engine.

7. Ship according to one of claims 1 to 6,
**characterised in that**
in an asymmetrical arrangement at least one bridge-gangway (23) is guided in the width of the ship as far as the vertical outboard wall limit (33).

8. Ship according to one of claims 1 to 7,
**characterised in that**
the type-C tank (8) is designed with a double wall and / or with insulation.

9. Ship according to one of claims 1 to 8,
**characterised in that**
in an asymmetrical arrangement of the bridge (3) this is provided at a distance from the boil-off mast (20) to reduce the potential risk.

10. Ship according to one of claims 1 to 9,
with rear superstructure separate from the deckhouse, provided in the area of the engine room of the ship, having one or more exhaust gas stacks,
**characterised in that**
the fuel tank(s) for liquefied gas is / are arranged in one or more fuel rooms below this superstructure.

11. Ship according to one of claims 1 to 10,
**characterised in that**
it is designed as a container ship.

## Revendications

1. Navire (1 ; 11) comprenant un rouf (2) en tant qu'au moins une superstructure,
une salle des machines (5) pourvue d'au moins une machine d'entraînement (4), et d'au moins un réservoir de carburant (8) pour du gaz liquéfié,
dans lequel le réservoir de carburant (8) pour du gaz liquéfié est prévu dans la zone du rouf (2) ou d'une superstructure, au-dessous du pont principal (16) du navire (1 ; 11),
dans lequel le réservoir de carburant (8) pour du gaz liquéfié est disposé dans un espace pour carburant (7) sous la forme d'un réservoir préfabriqué à l'extérieur du navire (1), lequel espace pour carburant est prévu directement de manière adjacente à la salle des machines (5),
caractérisé en ce
a) que le réservoir de carburant (8) est réalisé sous la forme d'un réservoir C,
b) qu'un espace d'exploitation de gaz (9) est disposé directement de manière adjacente à l'espace pour carburant (7),
c) que l'espace pour carburant (7), l'espace d'exploitation de gaz (9) et la salle des machines (5) sont disposés les uns par rapport aux autres directement de manière adjacente,
d) que le réservoir de carburant (8) présente un dôme de raccordement (13), qui est relié selon un raccordement à l'espace d'exploitation de gaz (9) disposé directement de manière adjacente à l'espace pour carburant (7),
e) que le réservoir C (8) avec son dôme de raccordement (13) est disposé de manière à faire saillie dans l'espace d'exploitation de gaz (9),
f) que le rouf (2) est prévu de manière asymétrique par rapport à l'axe longitudinal de navire (40) avec un espace dégagé (26) vers le bordé (33) latéral plus éloigné,
ou que le rouf (2) présente, dans la zone supérieure, une passerelle (3) disposée de manière asymétrique par rapport à l'axe longitudinal de navire (40) à distance d'un côté de navire ;
h) qu'au moins un mât « boil-off » (20) est prévu pour évacuer le fluide dangereux, tels qu'un gaz liquéfié vaporisé ; et
i) que le mât « boil-off » (20) est guidé vers le haut dans la zone extérieure du rouf (2) ou à distance de ce dernier dans l'espace dégagé (26) tout en surmontant le rouf (2) passerelle (3) y compris.

2. Navire selon la revendication 1,
**caractérisé en ce**
**que** le réservoir de carburant (8) préalablement fabriqué réalisé sous la forme d'un réservoir C (8) est disposé de manière suspendue, de manière couchée ou debout, avec une forme cylindrique ou une forme bilobée, dans l'espace pour carburant (7).

3. Navire selon l'une quelconque des revendications 1 ou 2,
**caractérisé en ce**
**que** le rouf (2) est disposé au-dessus de l'espace pour carburant (7) avec le réservoir de carburant (8) ou sur la salle des machines (5).

4. Navire selon l'une quelconque des revendications 1 à 3,
**caractérisé en ce**
**qu'**en cas d'une disposition asymétrique du rouf (2) avec l'espace dégagé (26), au moins un réservoir de carburant (8) est placé dans le navire sous l'espace dégagé (26).

5. Navire selon l'une quelconque des revendications 1 à 4,
**caractérisé en ce**
**que** l'espace dégagé (26) vers le bordé (33) latéral plus éloigné peut être utilisé pour l'empilement de conteneurs, de marchandises de détail ou un projet fret.

6. Navire selon l'une quelconque des revendications 1 à 5,
**caractérisé en ce**
**que** la machine d'entraînement (4) est configurée sous la forme d'une machine bicarburants ou d'une machine ne fonctionnant qu'avec du gaz.

7. Navire selon l'une quelconque des revendications 1 à 6,
**caractérisé en ce**
**que** dans le cas d'une disposition asymétrique, au moins une passerelle (23) est guidée dans la largeur de navire jusqu'à la délimitation de bordé (33) verticale.

8. Navire selon l'une quelconque des revendications 1 à 7,
**caractérisé en ce**
**que** le réservoir C (8) est exécuté avec une paroi double et/ou de manière isolée.

9. Navire selon l'une quelconque des revendications 1 à 8,
**caractérisé en ce**
**que** dans le cas d'une disposition asymétrique de la passerelle (3), cette dernière est prévue à distance par rapport au mât « boil-off » (20) afin de réduire les dangers potentiels.

10. Navire selon l'une quelconque des revendications 1 à 9,
comprenant une superstructure arrière séparée du rouf, prévue dans la zone de la salle des machines du navire, avec une ou plusieurs cheminées de gaz d'échappement,
**caractérisé en ce**
**que** le ou les réservoirs de carburant pour du gaz liquéfié sont disposés dans un ou plusieurs espaces pour carburant sous ladite superstructure.

11. Navire selon l'une quelconque des revendications 1 à 10,
**caractérisé en ce**
**qu'**il est réalisé sous la forme d'un navire porte-conteneurs.
